# FASCICULE DE BREVET EUROPEEN

(11) **EP 3 074 922 B1**
(45) Date de publication et mention de la délivrance du brevet: **21.11.2018**
(21) Numéro de dépôt: 14814946.1
(22) Date de dépôt: 24.11.2014
(51) Int. Cl.: G06K 9/00, G06T 5/50

(54) **SYSTÈME ET PROCÉDÉ DE FORMATION D'IMAGES NOCTURNES POUR UN VÉHICULE AUTOMOBILE**
SYSTEM UND VERFAHREN ZUM BILDEN VON NACHT BILDER FÜR EIN AUTO FAHRZEUG
SYSTEM AND METHOD FOR RENDERING NIGHT IMAGES FOR A CAR VEHICLE

(30) Priorité: 25.11.2013 FR 1361592
(43) Date de publication de la demande: 05.10.2016
(73) Titulaire: Renault s.a.s, 92100 Boulogne-Billancourt (FR)
(72) Inventeur: CORNOU, Sébastien, 91190 Gif sur Yvette (FR); AMBROISE, Stéphanie, 78140 Velizy (FR)
(86) Numéro de dépôt international: PCT/FR2014/053009
(87) Numéro de publication internationale: WO 2015/075402

(56) Documents cités:
- EP-A1- 1 638 039
- EP-A1- 2 199 975
- DE-A1-102007 008 542
- US-A1- 2003 123 752
- BURT P J ET AL: "Enhanced image capture through fusion", COMPUTER VISION, 1993. PROCEEDINGS., FOURTH INTERNATIONAL CONFERENCE O N BERLIN, GERMANY 11-14 MAY 1993, LOS ALAMITOS, CA, USA,IEEE COMPUTER SOCI, 11 mai 1993 (1993-05-11), pages 173-182, XP010128631, DOI: 10.1109/ICCV.1993.378222 ISBN: 978-0-8186-3870-1

## Description

L'invention a pour domaine technique les systèmes d'aide à la conduite, et plus particulièrement, les systèmes d'aide à la conduite par traitement d'images.

Plusieurs systèmes de détection de piétons sont actuellement disponibles sur des véhicules de série. Ces systèmes sont basés sur différentes technologies telles que la caméra thermique ou la caméra en proche infrarouge.

La caméra thermique induit l'ajout d'un capteur supplémentaire à une caméra frontale, qui doit être en contact avec l'environnement extérieur du véhicule pour détecter des gradients de températures liés à la présence éventuelle de piétons.

La caméra proche infrarouge nécessite l'ajout d'illuminateurs infrarouge sur le véhicule.

Ces deux technologies augmentent le cout du véhicule par l'ajout de composants supplémentaires.

Un bon compromis entre le coût et la performance réside dans l'utilisation d'une caméra frontale assurant déjà les prestations commercialisées, telles que l'alerte de changement de voie (en langue anglaise « Lane Departure Warning »), la commutation automatique code-phare, l'alerte de distance (en langue anglaise « Distance Warning) ou la détection nocturne de piétons.

Pour assurer la détection de piétons, il est nécessaire d'acquérir les images à l'aide de la caméra frontale et d'améliorer les images acquises pour augmenter les performances de l'algorithme de détection des piétons.

Dans le cas où seule l'image de la caméra est affichée au conducteur (sans détection de piéton), améliorer l'image peut aider le conducteur à déterminer plus aisément la présence de piétons et autres éléments importants présents dans la scène.

De l'état de la technique, on connaît le document EP2199975 et le document EP 2237221 qui décrit un procédé et une unité pour générer une image et une vidéo à grande gamme dynamique. Ce système construit une image de haute dynamique en exploitant un flux vidéo mais ne présente pas d'optimisation liée à des algorithmes applicatifs comme ceux utilisés dans les aides à la conduite (reconnaissance d'objet spécifique dans la scène).

Il demeure ainsi un problème relatif à la formation d'image nocturne améliorée lorsque la scène acquise par la caméra peut présenter simultanément des zones sous-exposées et surexposées rendant l'image difficilement lisible par le conducteur, comme décrit dans le document EP1368039.

L'invention a pour objet un système et procédé de formation d'images nocturnes pour un véhicule automobile muni de projecteurs, comme défini dans les revendication indépendantes 1 et 5; des modes de réalisation détaillés étant définis dans les revendications dépendantes.

D'autres buts, caractéristiques et avantages apparaîtront à la lecture de la description suivante donnée uniquement en tant qu'exemple non limitatif et faite en référence aux dessins annexés sur lesquels :
- la figure 1 illustre un véhicule muni d'un système de formation d'images nocturnes améliorées selon un premier mode de réalisation, et
- la figure 2 illustre un véhicule muni d'un système de formation d'images nocturnes améliorées selon un deuxième mode de réalisation.

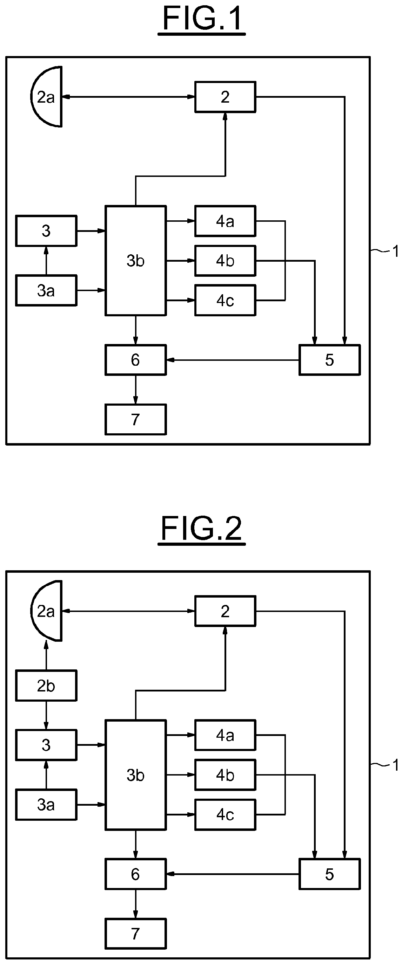

Sur la figure 1, on peut voir un véhicule 1 muni d'un système de commande 2 automatique des projecteurs 2a, d'une caméra 3 filmant la route, d'au moins un système d'aide à la conduite, et d'un dispositif d'affichage 7. Cette figure illustre un premier mode de réalisation dans lequel les projecteurs du véhicule ne sont pas pilotés. En d'autres termes, dès lors qu'ils sont allumés, les projecteurs éclairent constamment la scène (en feux de croisement ou de route) sans interaction avec la caméra.

La caméra 3 est une caméra frontale telle que l'on en trouve communément sur des véhicules équipés de systèmes d'aide à la conduite. La caméra 3 permet de capturer plusieurs images par secondes. Les images sont acquises successivement avec différentes sensibilités. Par exemple, une première image est acquise avec une première sensibilité, une deuxième image avec une deuxième sensibilité, une troisième image avec une troisième sensibilité. La quatrième image est alors acquise avec la première sensibilité, les images suivantes étant acquises en répétant en séquence la variation de sensibilité des premières images acquises. D'autres séquences d'acquisition peuvent être réalisées, notamment en considérant un autre nombre de sensibilités, ou un nombre différent d'images acquises à chaque sensibilité.

En effet, il peut être requis de disposer d'images acquises avec des paramètres particuliers afin de disposer d'images adéquates pour le traitement effectué par chaque système d'aide à la conduite. Les paramètres peuvent comprendre par exemple la sensibilité, le temps d'exposition et le gain.

Pour prendre en compte ces spécificités, une cartographie 3a comprend les paramètres d'acquisition pour chacun des systèmes d'aide à la conduite installés sur le véhicule. Cette cartographie 3a est connectée à la caméra 3 afin que les paramètres d'acquisition soient pris en compte et qu'au moins une image soit acquise chaque cycle d'acquisition avec les paramètres de chacun des modules de traitement d'image.

Cette même cartographie 3a permet également de transmettre à chacun des systèmes d'aide à la conduite, les images acquises avec les paramètres leur correspondant. Pour cela, la cartographie 3a est reliée à un commutateur 3b disposé en sortie de la caméra 3 et en amont des systèmes d'aide à la conduite. Le commutateur 3b est également muni de mémoires, non illustrées, permettant la mémorisation de tout ou partie des images acquises.

Bien évidemment, une même image peut être employée par plusieurs systèmes d'aide à la conduite si les paramètres d'acquisition des modules concernés sont similaires.

Par exemple, la détection des piétons la nuit en environnement non éclairé avec des projecteurs couvrant une distance maximale de 100m impose que la caméra soit réglée avec un gain maximal ou à des temps d'exposition importants. De tels réglages présentent l'inconvénient qu'une image acquise par la caméra en présence d'un objet lumineux ou phosphorescent est saturée en intensité dans la région d'intérêt où apparait l'objet. Cet inconvénient apparaît par exemple lorsque le véhicule effectuant la détection croise un autre véhicule circulant en sens inverse ou suit un véhicule muni de feux de signalisation intenses. Les phares des véhicules croisés saturent l'image acquise par la caméra.

Les phénomènes de saturation apparaissent également lorsque le véhicule circule avec ses projecteurs allumés et croise un panneau de signalisation phosphorescent.

Dans d'autres cas, le manque de luminosité induit une quasi-absence de contraste entre un piéton et son environnement. Cet inconvénient apparaît par exemple lorsqu'un piéton est habillé avec des vêtements sombres et absorbants la lumière, lorsqu'un piéton est situé à un distance importante du véhicule (et présente donc une taille apparente faible dans l'image acquise par la caméra), ou lorsqu'il pleut, les essuies glaces activés apparaissant dans l'image acquise par la caméra.

Les systèmes d'aide à la conduite, également appelés systèmes d'assistance avancée au conducteur (acronyme anglais ADAS pour « Advanced Driver Assistance Systems »), permettent pour certains de souligner divers éléments sur au moins une image de la caméra, de préférence en temps réel. Les éléments soulignés peuvent être la présence de piétons et de panneaux de signalisation.

D'autres systèmes d'aide à la conduite permettent d'automatiser certaines tâches, afin de respecter le code de la route, comme l'allumage des projecteurs en dessous d'un certain seuil de luminosité (nuit, tunnels) ou la commutation des projecteurs entre feux de route et feux de croisement, ou pour décharger le conducteur de certaines commandes comme l'actionnement des essuie-glaces.

Le système de commutation automatique code / phare permet de réduire le temps de commutation des phares aux codes. Il est référencé 2 sur la figure 1. Le système de commutation 2 automatique code / phare est relié aux projecteurs 2a et au commutateur 3b. En effet, le conducteur peut actionner les phares la nuit en environnement non éclairé et périurbain. Dès qu'un véhicule suivi ou circulant en sens inverse est détecté par la caméra, le système de commutation 2 active le passage en codes du projecteur 2a pour ne pas éblouir le conducteur du véhicule suivi ou circulant en sens inverse. Le système de commutation 2 émet en sortie la position des phares identifiés dans l'image acquise par la caméra ainsi que l'identifiant de l'image ayant permis la détection. La position des phares est définie sous la forme d'une zone d'intérêt, nommée ZONE_A, dans l'image analysée correspondant à la partie éclairée par les projecteurs. La zone d'intérêt ZONE_A est définie par ses coordonnées dans l'image. Cette zone est déterminée lors de l'assemblage des projecteurs, de la conception du véhicule ou du réglage de la hausse des projecteurs.

Lors de la calibration de la caméra, la trace des phares (feux de croisement et feux de route) dans une image acquise par la caméra est enregistrée et permet de définir deux zones, une première zone étant nommée ZONE_D pour les feux de route et une deuxième zone étant nommée ZONE_E pour les feux de croisement. La trace des phares (profil d'éclairement des projecteurs vue par la caméra) est obtenue soit par simulation les profils des projecteurs, les paramètres et l'emplacement de la caméra étant connu ou alors par enregistrement d'une image en chambre noir avec juste l'éclairage des projecteurs. Le passage d'une zone à l'autre est déterminé en fonction des consignes de commutation transmises aux projecteurs 2a. Les zones d'intérêt ZONE_D et ZONE_E sont disponibles sous forme de coordonnées. Les zones d'intérêt ZONE_D et ZONE_E sont liées à la conception du véhicule et demeurent identiques lors de l'acquisition des différentes images. Elles peuvent donc être définies une fois pour toutes pour une gamme de véhicule données (les paramètres de la caméra, sa position et les projecteurs étant les mêmes), ou être redéfinies lors d'un changement des projecteurs.

Alternativement, il est possible de piloter les projecteurs afin de modifier les conditions d'éclairage et/ou de déterminer dynamiquement les contours des zones d'intérêt ZONE_D et ZONE_E par soustraction d'une image acquise avec les projecteurs allumés et une image acquise dans les mêmes conditions mais avec les projecteurs éteints. Un tel mode de réalisation sera décrit ultérieurement en relation avec la figure 2.

Le système de détection 4a de panneaux de signalisation relié en entrée au commutateur 3b, émet en sortie la position, et éventuellement la forme et la taille d'au moins un panneau dans l'image acquise par la caméra ainsi que l'identifiant de l'image ayant permis la détection. Ces informations permettent de définir, par ses coordonnées, une zone d'intérêt, nommée ZONE_B, dans l'image acquise correspondante.

Le système de détection 4b de pluie et lumière permet de détecter la présence de gouttes d'eau sur le pare-brise et d'activer les essuie-glaces en fonction d'au moins une image provenant du commutateur 3b. Le système de détection 4b de pluie et lumière détermine la vitesse de balayage des essuie-glaces soit par occultation d'un capteur de lumière soit par réception de la commande de l'actionneur d'essuie-glaces. Le système de détection 4b détermine ensuite l'occurrence de passage des essuie-glaces dans le champ de vision de la caméra et donc la présence des essuie-glaces dans l'image acquise par la caméra. Ces informations permettent de définir une zone d'intérêt, nommée ZONE_C, dans l'image. Les coordonnées de la zone ZONE_C et l'identifiant de l'image ayant permis la détection sont émis en sortie du système de détection 4b de pluie et de lumière.

Le système de détection 4c de piétons permet de mettre en la présence des piétons présents sur au moins une image provenant du commutateur 3b. Les piétons sont encadrés par le système sous des formes géométriques, notamment des rectangles. Une fois que les piétons sont détectés, une zone est définie autour de chaque forme géométrique encadrant un piéton. Chacune de ces zones représente la zone d'évolution potentielle du piéton détecté. Le système de détection 4c émet en sortie les coordonnées des zones d'évolution potentielle du piéton sous forme matricielle au sein d'une zone d'intérêt unique nommée ZONE_D, accompagnée de l'identifiant de l'image sur laquelle la détection a été effectuée.

La sortie de ces différents systèmes d'aide à la conduite est connectée à un moyen de calcul 5 apte à définir une zone d'intérêt courante, appelée ZONE_COURANTE, qui correspond à la somme des zones d'intérêt parmi les zone d'intérêt ZONE_A à ZONE_F lorsque ces zones ont été déterminées par les différents systèmes. Il est à noter que la zone d'intérêt courante ZONE_COURANTE peut se résumer à une des zones d'intérêt ZONE_A à ZONE_F si une seule zone d'intérêt a été déterminée. La zone d'intérêt courante ZONE_COURANTE comprend ainsi les coordonnées de chacune des zones d'intérêt ZONE_A à ZONE_F disponibles, associées chacune à l'identifiant de l'image sur laquelle la zone d'intérêt a été détectée. Ces zones sont définies en fonction du type d'éclairage activé (croisement ou route). En d'autres termes, le moyen de calcul 5 agrège les informations issues du système de commutation 2 et des systèmes d'aide à la conduite au sein d'une seule zone d'intérêt.

Par exemple, lorsque l'on combine la détection de panneaux et la détection de véhicules croisés ou suivis, des zones d'intérêt ZONE_B et ZONE_D sont déterminées. Ces zones sont déterminées respectivement sur des images i1 et i3 acquises avec des sensibilités différentes. La zone courante correspond alors à la composition des coordonnées de la zone ZONE_B associées à l'identifiant de l'image il et des coordonnées de la zone ZONE_D associées à l'identifiant de l'image i3.

De même, si les essuie-glaces sont activés alors que les projecteurs sont en code, des zones d'intérêt ZONE_A et ZONE_C sont déterminées. Ces zones sont déterminées respectivement sur des images i1 et i2 acquises avec des sensibilités différentes. La zone courante correspond alors à la composition des coordonnées de la zone ZONE_A associées à l'identifiant de l'image il et des coordonnées de la zone ZONE_C associées à l'identifiant de l'image i2

Dans un autre exemple, la zone courante correspond à la seule zone d'intérêt ZONE_A associée à l'identifiant d'image il, tant que les essuie-glaces ne sont pas activés, qu'aucun panneau de signalisation n'est détecté, ni qu'aucun véhicule n'est croisé ni suivi, ni aucun piéton détecté, et que le véhicule circule en feux de route.

Le moyen de calcul 5 transmet ensuite la zone d'intérêt courante ZONE_COURANTE à un moyen 6 de traitement d'image connecté par ailleurs au commutateur 3b.

Le moyen 6 de traitement d'image compose alors une image destinée à être affichée sur le dispositif d'affichage 7 utilisable par le conducteur. Pour cela, le moyen 6 de traitement d'image définit pour chaque pixel de l'image compris dans la zone d'intérêt courante ZONE_COURANTE une intensité égale à l'intensité du pixel de mêmes coordonnées compris dans l'image ayant permis la détection de la zone d'intérêt.

Les pixels qui ne sont pas compris dans la zone d'intérêt courante ZONE_COURANTE reçoivent alors pour intensité, l'intensité du pixel de mêmes coordonnées compris dans une image caractérisée comme image « neutre » dans la cartographie 3a. Une telle image peut par exemple être l'image permettant détermination de la zone d'intérêt ZONE_A par le système de commutation automatique code / phare.

En d'autres termes, le moyen 6 de traitement d'image crée une image composite en remplaçant les parties d'une image « neutre » par les parties correspondantes d'images acquises avec des paramètres différents et permettant de faire ressortir certains éléments importants du champs de vision de la caméra, comme les piétons ou les panneaux de signalisation, tout en atténuant certains éléments comme le halo des phares d'un véhicule arrivant en sens opposé.

L'image finale ainsi obtenue est transmise au dispositif d'affichage 7 afin d'être visualisée par le conducteur.

La figure 2 illustre un deuxième mode de réalisation dans lequel les projecteurs sont pilotés. En d'autres termes, dès lors qu'ils sont allumés, les projecteurs éclairent la scène (en feux de croisement ou de route) en interaction avec la caméra. Cette interaction se manifeste essentiellement par la commutation à haute fréquence des projecteurs, de sorte que la caméra puisse acquérir une image avec projecteurs allumés, et une image avec projecteurs éteints. Avec une fréquence de commutation suffisamment haute, l'oeil humain ne peut percevoir la commutation. Le conducteur n'est donc pas gêné par la commutation.

Sur la figure 2, on peut voir que le véhicule 1 comprend un système de pilotage 2b des projecteurs connecté d'une part aux projecteurs 2a et d'autre part à la caméra 3. Ce système de pilotage 2b des projecteurs permet une définition dynamique de la zone d'éclairage des projecteurs 2a en synchronisant l'extinction des projecteurs avec une prise de vue de la caméra 3. Les projecteurs fonctionnent alors en mode feux de croisement. On note que pour une caméra fonctionnant à 30hz le temps d'extinction est de 1/30 de secondes. Cette capacité à éteindre les projecteurs sur un court laps de temps est possible avec des éclairages à diodes électroluminescentes (LED). Il est ainsi possible d'acquérir une image avec les projecteurs allumés et une image avec les projecteurs éteints. L'intervalle de temps entre ces deux prises de vue est suffisamment court pour que l'on considère qu'il n'y a pas de modification importante de l'image. Les deux images ainsi acquises sont transmises par le commutateur 3b à destination du système de commande 2 qui peut alors déterminer les zones d'intérêt liées aux projecteurs. Pour cela, on réalise notamment une opération de différence et de filtrage entre ces deux images qui permet de définir les zones éclairées par les projecteurs correspondant à la zone d'intérêt ZONE_A définie précédemment.

La même opération peut être réalisée lorsque les projecteurs sont en mode feux de route, afin de déterminer la zone d'intérêt ZONE_D.

Le système peut ainsi s'adapter plus facilement à des conditions d'éclairage diverses (niveau de charge du véhicule, orientation des projecteurs dans les courbes).

Alternativement, le système peut comprendre une caméra capable d'acquérir rapidement des images présentant des paramètres de réglage différents.

Le système et le procédé décrits ci-dessus sont ainsi particulièrement adaptés à l'amélioration des images à faible luminosité telles que les images nocturnes ou dans des tunnels.

## Revendications

1. Système de formation d'images nocturnes pour un véhicule automobile muni de projecteurs (2a), d'une caméra (3), d'un dispositif d'affichage (7) des images formées et d'au moins deux systèmes d'aide à la conduite aptes à émettre une zone d'intérêt en fonction d'au moins une image acquise par la caméra (3), un de ces au moins deux systèmes d'aide à la conduite étant un système de commutation (2) automatique des projecteurs,
la zone d'intérêt comprenant les coordonnées de la zone d'intérêt dans la au moins une image acquise, associées à un identifiant de l'image sur laquelle la détection a été réalisée, **caractérisé par le fait qu'**il comprend :
une cartographie (3a) des paramètres d'acquisition de chacun desdits au moins deux systèmes d'aide à la conduite connectée à la caméra (3) et à un commutateur (3b),
le commutateur (3b) étant apte à mémoriser les images acquises par la caméra (3) et à transmettre ces images à chacun desdits au moins deux systèmes d'aide à la conduite en fonction de la cartographie (3a) de sorte que chacun desdits au moins deux systèmes reçoit les images acquises avec les paramètres d'acquisition lui correspondant,
un système de pilotage (2b) des projecteurs apte à commander l'arrêt ou la mise en marche des projecteurs (2a) de manière synchronisée avec l'acquisition d'une image par la caméra (3),
ledit système de commutation (2) étant apte à émettre en sortie une zone d'intérêt comprenant la trace des projecteurs dans une image acquise par la caméra accompagnée de l'identifiant de l'image ayant permis la détermination,
le système de commutation (2) étant également apte à déterminer la zone d'intérêt en fonction de la différence entre une image acquise par la caméra (3) alors que les projecteurs (2a) sont allumés et une image acquise par la caméra (3) alors que les projecteurs (2a) sont éteints,
les projecteurs (2a) étant des projecteurs à diodes électroluminescentes,
un moyen de calcul (5) apte à déterminer une zone d'intérêt courante issue de la combinaison des zones d'intérêt d'au moins deux systèmes d'aide à la conduite,
un moyen (6) de traitement d'image apte à déterminer au moins une image dans laquelle l'intensité de chaque pixel est égale à l'intensité du pixel correspondant de l'image désignée par l'identifiant d'image de la zone d'intérêt courante.

2. Système selon la revendication 1, dans lequel au moins un desdits au moins deux systèmes d'aide à la conduite comprend au moins un parmi :
un système de commutation (2) automatique des projecteurs apte à émettre en sortie une autre zone d'intérêt comprenant la position des projecteurs d'au moins un véhicule identifiés dans une image acquise par la caméra accompagnée de l'identifiant de l'image ayant permis la détection,
un système de détection (4a) de panneaux de signalisation apte à émettre en sortie une zone d'intérêt comprenant la position d'au moins un panneau de signalisation dans une image acquise par la caméra accompagnée de l'identifiant de l'image ayant permis la détection,
un système de détection (4b) de pluie et lumière apte à émettre en sortie une zone d'intérêt comprenant la position des essuie-glaces dans une image acquise par la caméra accompagnée de l'identifiant de l'image ayant permis la détection, et
un système de détection (4c) de piétons apte à émettre en sortie une zone d'intérêt comprenant une zone d'évolution potentielle d'au moins un piéton dans une image acquise par la caméra accompagnée de l'identifiant de l'image ayant permis la détection.

3. Système selon la revendication 2, dans lequel la zone d'intérêt comprenant la trace des projecteurs est déterminée pour des projecteurs (2a) en mode feux de route ou en mode feux de croisement.

4. Procédé de formation d'images nocturnes pour un véhicule automobile muni de projecteurs (2a), d'une caméra (3), d'un dispositif d'affichage (7) des images formées, et d'au moins deux systèmes d'aide à la conduite, un de ces au moins deux systèmes d'aide à la conduite étant un système de commutation (2) automatique des projecteurs,
ledit procédé comportant une étape dans laquelle on détermine par l'intermédiaire au moins du système de commutation (2) parmi lesdits au moins deux système d'aide à la conduite au moins une zone d'intérêt comprenant les coordonnées de la zone d'intérêt dans l'image associées à un identifiant de l'image sur laquelle la détection a été réalisée, et
ledit procédé étant **caractérisé par le fait qu'**il comprend les étapes suivantes:
on réalise l'acquisition d'au moins une image en fonction de paramètres d'acquisition propres à chacun desdits au moins deux systèmes d'aide à la conduite connectée,
on mémorise les images acquises puis on les transmet à chacun desdits au moins deux systèmes d'aide à la conduite de sorte que chaque système reçoit les images acquises avec les paramètres d'acquisition lui correspondant,
on commande l'arrêt ou la mise en marche des projecteurs (2a) de manière synchronisée avec l'acquisition d'une image par la caméra (3),
ledit système de commutation (2) étant apte à émettre en sortie une zone d'intérêt comprenant la trace des projecteurs dans une image acquise par la caméra accompagnée de l'identifiant de l'image ayant permis la détermination, et
on détermine la zone d'intérêt en fonction de la différence entre une image acquise par la caméra (3) alors que les projecteurs (2a) sont allumés et une image acquise par la caméra (3) alors que les projecteurs (2a) sont éteints
on détermine une zone d'intérêt courante issue de la combinaison des zones d'intérêt des systèmes d'aide à la conduite, et
on détermine au moins une image dans laquelle l'intensité de chaque pixel est égale à l'intensité du pixel correspondant de l'image désignée par l'identifiant d'image de la zone d'intérêt courante.

5. Procédé selon la revendication 4, dans lequel au moins un desdits au moins deux systèmes d'aide à la conduite comprennent au moins un parmi :
un système de commutation (2) automatique des projecteurs, apte à émettre en sortie une autre zone d'intérêt comprenant la position des projecteurs d'au moins un véhicule identifiés dans une image acquise par la caméra accompagnée de l'identifiant de l'image ayant permis la détection,
un système de détection (4a) de panneaux de signalisation apte à émettre en sortie une zone d'intérêt comprenant la position d'au moins un panneau de signalisation dans une image acquise par la caméra accompagnée de l'identifiant de l'image ayant permis la détection,
un système de détection (4b) de pluie et lumière apte à émettre en sortie une zone d'intérêt comprenant la position des essuie-glaces dans une image acquise par la caméra accompagnée de l'identifiant de l'image ayant permis la détection, et
un système de détection (4c) de piétons apte à émettre en sortie une zone d'intérêt comprenant une zone d'évolution potentielle d'au moins un piéton dans une image acquise par la caméra accompagnée de l'identifiant de l'image ayant permis la détection.

6. Procédé selon la revendication 5, dans lequel la zone d'intérêt comprenant la trace des projecteurs est déterminée pour des projecteurs en mode feux de route ou en mode feux de croisement.

## Patentansprüche

1. System zur Erzeugung von Nachtbildern für ein mit Scheinwerfern (2a), einer Kamera (3), einer Anzeigevorrichtung (7) der erzeugten Bilder und mit mindestens zwei Fahrhilfesystemen ausgestattetes Kraftfahrzeug, die einen interessierenden Bereich abhängig von mindestens einem von der Kamera (3) aufgenommenen Bild emittieren können, wobei eines dieser mindestens zwei Fahrhilfesysteme ein automatisches Schaltsystem (2) der Scheinwerfer ist,
wobei der interessierende Bereich die Koordinaten des interessierenden Bereichs in dem mindestens einen aufgenommenen Bild enthält, die einer Kennung des Bilds zugeordnet sind, an dem die Erfassung durchgeführt wurde,
**dadurch gekennzeichnet, dass** es enthält:
ein Kennfeld (3a) der Aufnahmeparameter jedes der mindestens zwei Fahrhilfesysteme, das mit der Kamera (3) und mit einem Schalter (3b) verbunden ist,
wobei der Schalter (3b) die von der Kamera (3) aufgenommenen Bilder speichern und diese Bilder an jedes der mindestens zwei Fahrhilfesysteme abhängig vom Kennfeld (3a) übertragen kann, so dass jedes der mindestens zwei Systeme die aufgenommenen Bilder mit den ihm entsprechenden Aufnahmeparametern empfängt,
ein Steuersystem (2b) der Scheinwerfer, das das Ausschalten oder das Einschalten der Scheinwerfer (2a) synchron mit der Aufnahme eines Bilds durch die Kamera (3) steuern kann,
wobei das Schaltsystem (2) am Ausgang einen interessierenden Bereich emittieren kann, der die Spur der Scheinwerfer in einem von der Kamera aufgenommenen Bild begleitet von der Kennung des Bilds enthält, das die Bestimmung ermöglicht hat,
wobei das Schaltsystem (2) ebenfalls den interessierenden Bereich abhängig von der Differenz zwischen einem von der Kamera (3) aufgenommenen Bild, während die Scheinwerfer (2a) eingeschaltet sind, und einem von der Kamera (3) aufgenommenen Bild, wenn die Scheinwerfer (2a) ausgeschaltet sind, bestimmen kann,
wobei die Scheinwerfer (2a) Scheinwerfer mit Elektrolumineszenzdioden sind,
eine Recheneinrichtung (5), die einen laufenden interessierenden Bereich bestimmen kann, der von der Kombination der interessierenden Bereiche von mindestens zwei Fahrhilfesystemen stammt,
eine Bildverarbeitungseinrichtung (6), die mindestens ein Bild bestimmen kann, in dem die Intensität jedes Pixels gleich der Intensität des entsprechenden Pixels des von der Bildkennung des laufenden interessierenden Bereichs bezeichneten Bilds ist.

2. System nach Anspruch 1, wobei mindestens eines der mindestens zwei Fahrhilfesysteme mindestens eines enthält von:
einem automatischen Schaltsystem (2) der Scheinwerfer, das am Ausgang einen weiteren interessierenden Bereich emittieren kann, der die Stellung der Scheinwerfer mindestens eines Fahrzeugs enthält, die in einem von der Kamera aufgenommenen Bild begleitet von der Kennung des Bilds erkannt werden, das die Erfassung ermöglicht hat,
ein Erfassungssystem (4a) von Verkehrszeichen, das am Ausgang einen interessierenden Bereich emittieren kann, der die Stellung mindestens eines Verkehrszeichens in einem von der Kamera aufgenommenen Bild begleitet von der Kennung des Bilds enthält, das die Erfassung ermöglicht hat,
ein Erfassungssystem (4b) von Regen und Licht, das am Ausgang einen interessierenden Bereich emittieren kann, der die Stellung der Scheibenwischer in einem von der Kamera aufgenommenen Bild begleitet von der Kennung des Bilds enthält, das die Erfassung ermöglicht hat, und
ein Erfassungssystem (4c) von Fußgängern, das am Ausgang einen interessierenden Bereich emittieren kann, der einen Bereich möglicher Fortbewegung mindestens eines Fußgängers in einem von der Kamera aufgenommenen Bild begleitet von der Kennung des Bilds enthält, das die Erfassung ermöglicht hat.

3. System nach Anspruch 2, wobei der die Spur der Scheinwerfer enthaltende interessierende Bereich für Scheinwerfer (2a) im Modus Fernlicht oder im Modus Abblendlicht bestimmt wird.

4. Verfahren zur Erzeugung von Nachtbildern für ein mit Scheinwerfern (2a), einer Kamera (3), einer Anzeigevorrichtung (7) der erzeugten Bilder und mit mindestens zwei Fahrhilfesystemen ausgestattetes Kraftfahrzeug, wobei eines dieser mindestens zwei Fahrhilfesysteme ein automatisches Schaltsystem (2) der Scheinwerfer ist,
wobei das Verfahren einen Schritt aufweist, während dessen mittels mindestens des Schaltsystems (2) unter den mindestens zwei Fahrhilfesystemen mindestens ein interessierender Bereich bestimmt wird, der die Koordinaten des interessierenden Bereichs im Bild enthält, die einer Kennung des Bilds zugeordnet sind, an dem die Erfassung durchgeführt wurde, und
wobei das Verfahren **dadurch gekennzeichnet ist, dass** es die folgenden Schritte enthält:
es wird die Aufnahme mindestens eines Bilds abhängig von Aufnahmeparametern durchgeführt, die zu jedem der mindestens zwei angeschlossenen Fahrhilfesysteme gehören,
die aufgenommenen Bilder werden gespeichert, dann werden sie an jedes der mindestens zwei Fahrhilfesysteme übertragen, so dass jedes System die aufgenommenen Bilder mit den ihm entsprechenden Aufnahmeparametern empfängt,
das Ein- oder Ausschalten der Scheinwerfer (2a) wird synchron mit der Aufnahme eines Bilds durch die Kamera (3) gesteuert,
wobei das Schaltsystem (2) am Ausgang einen interessierenden Bereich emittieren kann, der die Spur der Scheinwerfer in einem von der Kamera aufgenommenen Bild begleitet von der Kennung des Bilds enthält, das die Bestimmung ermöglicht hat, und
der interessierende Bereich wird abhängig von der Differenz zwischen einem von der Kamera (3) aufgenommenen Bild, während die Scheinwerfer (2a) eingeschaltet sind, und einem von der Kamera (3) aufgenommenen Bild, während die Scheinwerfer (2a) ausgeschaltet sind, bestimmt,
es wird ein laufender interessierender Bereich bestimmt, der aus der Kombination der interessierenden Bereiche der Fahrhilfesysteme stammt, und
es wird mindestens ein Bild bestimmt, bei dem die Intensität jedes Pixels gleich der Intensität des entsprechenden Pixels des Bilds ist, das durch die Bildkennung des laufenden interessierenden Bereichs bezeichnet wird.

5. Verfahren nach Anspruch 4, wobei mindestens eines der mindestens zwei Fahrhilfesysteme mindestens eines enthält von:
einem automatischen Schaltsystem (2) der Scheinwerfer, das am Ausgang einen weiteren interessierenden Bereich emittieren kann, der die Stellung der Scheinwerfer mindestens eines Fahrzeugs enthält, die in einem von der Kamera aufgenommenen Bild begleitet von der Kennung des Bilds erkannt werden, das die Erfassung ermöglicht hat,
einem Erfassungssystem (4a) von Verkehrszeichen, das am Ausgang einen interessierenden Bereich emittieren kann, der die Stellung mindestens eines Verkehrszeichens in einem von der Kamera aufgenommenen Bild begleitet von der Kennung des Bilds enthält, das die Erfassung ermöglicht hat,
einem Erfassungssystem (4b) von Regen und Licht, das am Ausgang einen interessierenden Bereich emittieren kann, der die Stellung der Scheibenwischer in einem von der Kamera aufgenommenen Bild begleitet von der Kennung des Bilds enthält, das die Erfassung ermöglicht hat, und
ein Erfassungssystem (4c) von Fußgängern, das am Ausgang einen interessierenden Bereich emittieren kann, der einen Bereich möglicher Fortbewegung mindestens eines Fußgängers in einem von der Kamera aufgenommenen Bild begleitet von der Kennung des Bilds enthält, das die Erfassung ermöglicht hat.

6. Verfahren nach Anspruch 5, wobei der die Spur der Scheinwerfer enthaltende interessierende Bereich für Scheinwerfer im Modus Fernlicht oder im Modus Abblendlicht bestimmt wird.

## Claims

1. System for forming nighttime images for a motor vehicle provided with headlights (2a), a camera (3), a device (7) for displaying the images formed and at least two driver assistance systems capable of transmitting an area of interest, as a function of at least one image acquired by the camera (3), one of these at least two driver assistance systems being a system (2) for the automatic switching of headlights,
the area of interest comprising the coordinates of the area of interest in the at least one acquired image, associated with an identifier of the image upon which the detection was carried out, **characterized in that** the system comprises:
a mapping (3a) of the acquisition parameters of each of said at least two driver assistance systems connected to the camera (3) and to a switch (3b),
the switch (3b) being capable of storing the images acquired by the camera (3) and of transmitting these images to each of said at least two driver assistance systems as a function of the mapping (3a) so that each of said at least two systems receives the acquired images with the acquisition parameters corresponding to it,
a system (2b) for controlling headlights capable of commanding the switching off or on of the headlights (2a) in a way that is synchronized with the acquisition of an image by the camera (3),
said switching system (2) being capable of transmitting at its output an area of interest comprising the illumination pattern of the headlights in an image acquired by the camera accompanied by the identifier of the image having allowed the determination,
the switching system (2) also being capable of determining the area of interest as a function of the difference between an image acquired by the camera (3) whilst the headlights (2a) are on and an image acquired by the camera (3) whilst the headlights (2a) are off,
the headlights (2a) being light emitting diode headlights,
a calculation means (5) capable of determining a current area of interest from the combination of the areas of interest of at least two driver assistance systems,
an image processing means (6) capable of determining at least one image in which the intensity of each pixel is equal to the intensity of the corresponding pixel in the image designated by the image identifier in the current area of interest.

2. System according to Claim 1, in which at least one of said at least two driver assistance systems comprises at least one from among:
a system (2) for the automatic switching of headlights capable of transmitting at its output another area of interest comprising the position of the headlights of at least one vehicle identified in an image acquired by the camera accompanied by the identifier of the image having allowed the detection,
a system (4a) for detecting road signs capable of transmitting at its output an area of interest comprising the position of at least one road sign in an image acquired by the camera accompanied by the identifier of the image having allowed the detection,
a system (4b) for detecting rain and light capable of transmitting at its output an area of interest comprising the position of the windscreen wipers in an image acquired by the camera accompanied by the identifier of the image having allowed the detection, and
a system (4c) for detecting pedestrians capable of transmitting at its output an area of interest comprising an area of potential movement of at least one pedestrian in an image acquired by the camera accompanied by the identifier of the image having allowed the detection.

3. System according to Claim 2, in which the area of interest comprising the illumination pattern of the headlights is determined for headlights (2a) in high beam or in low beam mode.

4. Method for forming nighttime images for a motor vehicle provided with headlights (2a), a camera (3), a device (7) for displaying the images formed, and at least two driver assistance systems, one of these at least two driver assistance systems being a system (2) for the automatic switching of headlights, and at least two driver assistance system,
said method comprising a step in which there is determined, by the intermediary at least of the switching system (2) from among said at least two driver assistance systems, at least one area of interest comprising the coordinates of the area of interest in the image associated with an identifier of the image upon which the detection was carried out, and said method being **characterized in that** it comprises the following steps:
the acquisition of at least one image is carried out as a function of acquisition parameters specific to each of said at least two connected driver assistance systems,
the acquired images are stored and then they are transmitted to each of said at least two driver assistance systems in such a way that each system receives the acquired images with the acquisition parameters corresponding to it,
the switching off or on of the headlights (2a) is controlled in a way that is synchronized with the acquisition of an image by the camera (3),
said switching system (2) being capable of transmitting at its output an area of interest comprising the illumination pattern of the headlights in an image acquired by the camera accompanied by the identifier of the image having allowed the determination, and
the area of interest is determined as a function of the difference between an image acquired by the camera (3) whilst the headlights (2a) are on and an image acquired by the camera (3) whilst the headlights (2a) are off,
there is determined a current area of interest from the combination of the areas of interest of the driver assistance systems, and
there is determined at least one image in which the intensity of each pixel is equal to the intensity of the corresponding pixel of the image designated by the image identifier of the current area of interest.

5. Method according to Claim 4, in which at least one of said at least two driver assistance systems comprise at least one from among:
a system (2) for the automatic switching of the headlights, capable of transmitting at its output another area of interest comprising the position of the headlights of at least one vehicle identified in an image acquired by the camera accompanied by the identifier of the image having allowed the detection,
a system (4a) for detecting road signs capable of transmitting at its output an area of interest comprising the position of at least one road sign in an image acquired by the camera accompanied by the identifier of the image having allowed the detection,
a system (4b) for detecting rain and light capable of transmitting at its output an area of interest comprising the position of the windscreen wipers in an image acquired by the camera accompanied by the identifier of the image having allowed the detection, and
a system (4c) for detecting pedestrians capable of transmitting at its output an area of interest comprising an area of potential movement of at least one pedestrian in an image acquired by the camera accompanied by the identifier of the image having allowed the detection.

6. Method according to Claim 5, in which the area of interest comprising the illumination pattern of the headlights is determined for headlights in high beam mode or in low beam mode.
